Europäisches Patentamt

(19) **European Patent Office**

Office européen des brevets

(11) Publication number: **0 270 123**
**B1**

(12) **EUROPEAN PATENT SPECIFICATION**

(45) Date of publication of the patent specification:
**07.11.90**

(51) Int. Cl.$^5$: **G01G 23/01**

(21) Application number: **87117937.0**

(22) Date of filing: **04.12.87**

(54) **Method and apparatus for calibrating and/or checking of load cells.**

(30) Priority: **05.12.86 DE 3641572**

(43) Date of publication of application:
**08.06.88 Bulletin 88/23**

(45) Publication of the grant of the patent:
**07.11.90 Bulletin 90/45**

(84) Designated Contracting States:
**AT BE CH DE ES FR GB LI**

(56) References cited:
**DE-A- 3 447 382**
**US-A- 4 523 653**

(73) Proprietor: **Pfister GmbH, Stätzlinger Strasse 70,
D-8900 Augsburg(DE)**

(72) Inventor: **Häfner, Hans W., Fichtenweg 15,
D-8890 Aichach(DE)**

(74) Representative: **Kahler, Kurt, Patentanwalt Dipl.-Ing.
Kurt Kahler Gerberstrasse 3 Postfach 1249,
D-8948 Mindelheim(DE)**

## Description

<u>Field of the Invention:</u>

The invention relates to a method and an apparatus for calibrating and/or checking of load cells incorporated in vehicle weighing systems, bunkers or similar heavy load devices.

<u>Background Art:</u>

Vehicle weighing systems, bunker or bin weighing systems or similar heavy load weighing devices generally use load cells in a measuring range of, for example .1 to 10 MN. After built-in of the load cells into the systems they are to be calibrated and periodically checked for proper function. Often it was necessary to load these weighing systems with very large calibrating or test masses of considerably varying sizes. For example, a truck was put onto the platform of a vehicle weighing system to be calibrated, the truck having an exactly defined mass. Then, the truck was removed from the platform and loaded with a pre-determined calibration mass and put onto the platform again.This procedure was performed again, for example, 20 times with the truck being loaded with different calibration masses or standards each time.

Furthermore from DE-A1 3 447 382 it is known to use for calibrating or testing weighing systems a hydraulical or mechanical calibrating or testing device provided with an exactly calibrated reference load cell. In view of the inherent creepage in the engaging connection between the weighing system and the calibrating or testing device the force applied to the weighing system does not maintain definitely constant. Thus, the amount of calibrating force has to be continuously surveyed and the accuracy of calibrating or testing is rather low. Moreover, the installation of the engaging connection is rather complicated due to a plurality of parts like 2 or 3 connecting rods for each load cell.

<u>Summary of the Invention</u>

It is an object of the invention to provide a method for calibrating and/or testing of load cells incorporated in heavy load weighing systems the method having a very high accuracy.

It is a further object of the invention to provide an apparatus for calibrating and/or testing of load cells incorporated in heavy load weighing systems, the apparatus having a very simple design and being easy transportable.

It is a further object of the invention to provide an apparatus for calibrating and/or testing load cells incorporated in heavy load weighing systems the apparatus having a very high accuracy.

It is a still further object of the present invention to provide a method for calibrating and/or testing of load cells incorporated in heavy load weighing systems, the method being easy to apply, fast and accurate.

These and other objects of the invention are achieved by an apparatus for calibrating and/or testing of load cells interposed between a base and a force introduction member of heavy duty weighing systems comprising: a force transmission device adapted to be placed against said force introduction member; and connecting means for connecting said force transmission device to said base at a position close to said load cell and arranged in a direction of a force applied by said force transmission device to said load cell, wherein the force transmission device comprises a frictionless and self-adjustable wedge-type transmission means being loaded by a calibration mass.

According to another aspect of the invention there is provided a method for calibrating and/or testing of lead cells interposed between a base and a force introduction member of a heavy duty weighing system by connecting said force transmission device through a passage of said force introduction member to said base comprising the steps of

a) placing said force transmission device, which is self-adjustable without friction and provided with a further passage against said force introduction member in alignment with said passages;

b) inserting a single connecting member into said aligned passages;

c) loading said force transmission device with a calibrating mass in the range of 50 to 5000 times smaller than the standard loading of said weighing system;

d) determining the reading of said load cell:

e) repeating steps c) and d) with different calibrating masses for determining a calibration or testing curve in respect of said load cell.

<u>Brief Description of the Drawing:</u>

The Figur is an elevational view partly in section of the calibrating and/or testing apparatus of the invention as applied to a vehicle weighing system.

<u>Best Mode of Carrying out the Invention:</u>

The Figur shows part of a vehicle weighing system comprising a base 12 and a  platform as a force introduction member 22 having a load cell 18 provided therebetween. The load cell 18 rests on the base 12 and the load, f.i. a truck or a similar vehicle put on the platform 22 is introduced into the load cell 18 from the platform 28 via a girder 34 provided on the bottom side of the platform 22.

It will be appreciated that the weighing system must be calibrated after incorporating the load cell 18 into the system. Then, very large masses are required to calibrate the load cell 18.

Thus, according to the invention there is used a force transmission device generally indicated by the reference numeral 40 which is inherently self-adjustable without friction and which allows in prefered embodiment, due to high ratio of force transmission, and the frictionless transmission of force application to use very small calibrating standards.

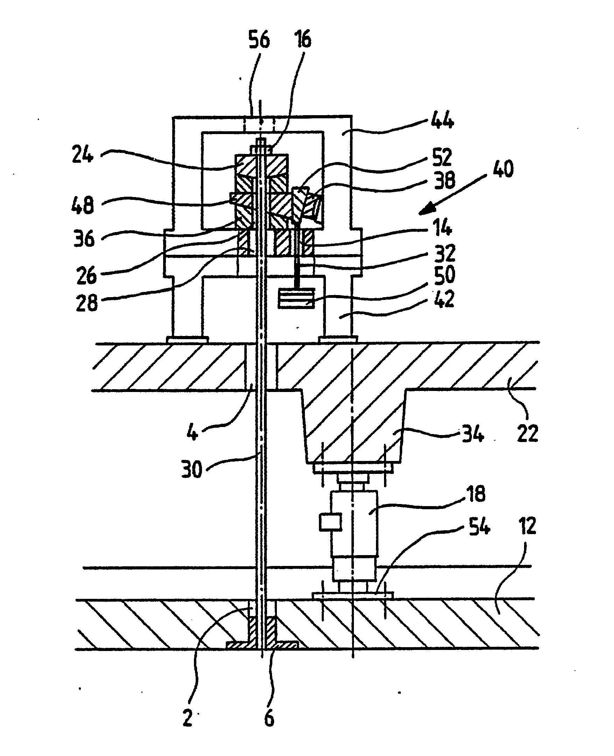

The principal of design and operation of the force transmission apparatus 40 have been disclosed in detail in USA Patent 4 213 509, in particular Fig. 3 and associated description, however, in quite a different environment, namely for testing load cells as such, put into the apparatus.

In view of the detailed disclosure in USA Patent 4 213 509 a description of the force transmission apparatus 40 used in connection with the invention is restricted to the basic design. Thus, the apparatus 40 comprises a frame 42 adapted to be firmly placed on the platform 22, the frame 42 supports a housing 44 containing the force transmission elements, in particular wedges 48 and 52 which are guided in hydrostatic or pneumostatic bearings as explained in detail in the above mentioned USA Patent. Specifically wedge 48 is frictionlessly guided for having screwed thereon a nut 16.

On the other hand, wedge 52 is arranged for movement in vertical direction between one of the end surfaces of wedge 48 and a support element 38 resting on an inner side surface of the housing 44.

It should be noted that the top surface of support element 36 has a spherical shape and has engaged thereto, again by interposing a hydrostatic bearing, a fixing member 24 having a bottom surface formed complementary to the top surface of support element 36.

It should be noted, that there is provided an essentially vertical passage 26 in the support element 36 and, aligned thereto, a passage 28 in the frame 42 for loosely passing a connecting member 30, preferably a rod made of metal. The upper end of the connecting member 30 passes through the fixing member 24 as well, and is provided with a threading for having screwed thereon a nut 16.

As may seen from the Figur the connecting member 30 passes a passage 4 as well, provided in the platform 22 and has its lower end 2 provided with a threading to be screwed into a holding member 6 fixed at the base 12. It should be noted, that the threading might be provided in a bore in the base 12, thus eliminating the holding member 6. Furthermore, the upper end of the connecting member 30 may be fixed to fixing member 24 in another way than by the nut 16.

In order to calibrate or test the load cell 18 the wedge 52 is loaded by an exactly defined calibration mass or standard 50 in vertical direction. This calibration mass 50 may be connected to the lower end of wedge 52 by a cord 32 passed through a passage 14 in the frame 42, or such calibration mass 50 may be put onto the upper horizontal end surface of the wedge 52 or a table appropriately attached to this upper surface.

Though in the Figur two wedges 48 and 52 are shown for transmitting a low force caused by the calibration mass 50 into very high force applied to the load cell 18, it should be appreciated, that the transmission apparatus 40 may use one wedge 48 only having the cord or wire 32 directly connected to the left end surface (in the Figur) the cord 32 being deflected to the horizontal direction by means of a roll (not shown) or a similar means.

Calibrating or testing the load cell 18 is accomplished according to the method of the invention as follows:

First, the apparatus 40 is placed onto the platform 22 in essential alignment of the passages 26, 28 and 4 and the holding member 6. Now, the connecting member 30 is introduced through an opening 56 in the top wall of the housing 44 and is passed through the passages 26, 28 and 4 in order to engage the threading of the holding members 6.

As a next step the connecting member 30 is threaded into the holding member 6 with the nut 16 fixed to the upper end of the connecting member 30. The result is a firm exactly defined transmission chain from the calibrating mass 50, via wedges 52, 48, the upper part of the support element 36 to the fixing member 24, the connecting member 30, the holding member 6 to the base 12 and the lower end of the load cell 18.

On the other hand, the reaction force is transmitted through the lower part of support element 36, the frame 42 and the platform 22 to the upper end of the load cell 18. Thus, a very high force, corresponding to the calibration mass 50 attached to cord 32, but transmitted in a very high ratio, for example in the range of 1:100 to 1:5000 due to the transmission ratios of the two wedges 52 and 48 is applied between the upper and lower ends of the load cell 18.

As explained in detail in the above mentioned USA Patent, due to the guidance of the wedges 48 and 52 in hydrostatic bearings there is no friction at all and the apparatus is self-adjusting; thus, it is the exactly defined force caused by the calibration mass 50 which is applied to the load cell 18.

Now, the load cell 18 will generate an electrical signal corresponding to the force applied. By varying the calibration mass 50 various readings are derived from the load cell 18 which may be used for plotting the usual calibration curve.

Alternatively, the various values of the calibration masses 50 and their corresponding readings of the load cell 18 may be entered into an electronic evaluation device for compensating any deviations of the load cell 18 in any future weighing procedures.

It should be noted, that due to the spherical hydrostatic bearing between the top surface of the support element 36 and the fixing member 24 any deviation from the exact vertical direction of the connecting member 30 may be compensated.

In the forgoing description a method and an apparatus for calibrating and/or testing of load cells has been disclosed in corporated in heavy load weighing systems. Due to using a transmission device having a high transmission ratio and being self-adjustable without any friction, it is possible to calibrate and/or test such load cells using very small calibration masses. Also, the transmission apparatus is a compact device which is easily transportable as the calibration masses are.

## Claims

1. An apparatus for calibrating and/or testing load cells (18) interposed between a base (12) and a force introduction member (22) of heavy duty weighing systems comprising: a force transmission device (40) adapted to be placed against said force introduction member (22); and connecting means (30)

3

for connecting said force transmission device (40) to said base (12) at a position close to said load cell (18) and arranged in a direction of a force applied by said force transmission device (40) to said load cell (18), characterized in that, the force transmission device (40) comprises a frictionless and self-adjustable wedge-type transmission means (48, 36) being loaded by a calibration mass (50).

2. The apparatus of claim 1, wherein said force transmission device (40) has a transmission ratio in the range of about 50 to 5000.

3. The apparatus of claim 1 or 2, wherein said force transmission device (40) is guided in hydrostatic bearings within a support member (36).

4. The apparatus of claim 3, wherein said wedge-type transmission means (48, 36) comprises first and second wedges (48, 52), said first wedge (48) having an axis of movement extending horizontally and said second wedge (52) having an axis of movement extending vertically, wherein said calibration mass (50) is attached to said second wedge (52) applying a force thereto in vertical direction.

5. The apparatus of claim 3, wherein said wedge-type means (48, 36) comprises a wedge (48) having an axis of movement extending horizontally, a calibration mass (50) being applicable thereto by a flexible means (32) for pulling said wedge (48) in said horizontal direction.

6. The apparatus of any of the preceding claims, wherein said connecting means (30) consists of a single connecting member (30) extending from said force transmission device (40) to said base (12) and is provided at a lower end thereof with holding means (6) for fixing said connecting member (30) to said base (12).

7. The apparatus of claim 6, wherein said lower end (2) of said connecting member (30) is provided with a threading adapted to be screwed into said holding means (6) provided in said base (12), preferably in the form of a sleeve fixedly inserted into said base (12) and having an inner threading for engagement with said connecting member (30).

8. The apparatus of claim 3, wherein said support member (36) having a top surface being in engagement with a bottom surface of said fixing member (24) via a hydrostatic bearing, the engaging surfaces being preferably spherically formed.

9. A method for calibrating and/or testing of load cells (18) interposed between a base (12) and a force introduction member (22) of a heavy duty weighing system by connecting a force transmission device (40) through a passage (4) of said force introduction member (22) to said base (12) characterized by the steps of

a) placing said force transmission device (40), which comprises a self-adjustable and frictionless wedge-type transmission means (48, 36) and is provided with a passage (26, 28), against said force introduction member (22) in alignment with said passages (4, 26, 28);

b) inserting a single connecting member (30) into said aligned passages (4, 26, 28);

c) loading said force transmission device (40) with a calibrating mass (50) in the range of 50 to 5000 times smaller than the standard loading of said weighing system;

d) determining the reading of said load cell;

e) repeating steps c) and d) with different calibrating masses (50) for determining a calibration or testing curve in respect of said load cell (18).

10. The method of claim 9, wherein said steps a) to e) are preceded by providing said base (12) with a holding means (6) for said connecting member (30) and providing said force introduction member (22) with said passage (4) essentially aligned in vertical direction with said holding means (6).

11. The apparatus of claim 6, further comprising: a first passage (4) in said force introduction member (22) for said connecting member (30), wherein said connecting member (30) is passing said force transmission device (40) through further passages (26, 28) being vertically aligned with said first passage (4).

## Patentansprüche

1. Einrichtung zum Kalibrieren und/oder Prüfen von Lastmeßzellen (18), die zwischen eine Basis (12) und ein Krafteinleitungselement (22) von Schwergewicht-Wiegesystemen eingefügt sind, mit:
– einer Kraftübertragungsvorrichtung (40), die geeignet ist, gegen das Krafteinleitungselement (22) angelegt zu werden; und
– Verbindungsvorrichtungen (30) zum Verbinden der Kraftübertragungsvorrichtung (40) mit der Basis (12) an einer Position nahe der Lastmeßzelle (18) und angeordnet in Richtung einer durch die Kraftübertragungsvorrichtung (40) auf die Lastmeßzelle (18) angelegten Kraft, dadurch gekennzeichnet, daß die Kraftübertragungsvorrichtung (40) reibungslose und selbstjustierende keilartige Übertragungsvorrichtungen (48, 36) aufweist, die mit einer Kalibriermasse (50) belastet werden.

2. Einrichtung nach Anspruch 1, wobei die Kraftübertragungsvorrichtung (40) ein Übertragungsverhältnis im Bereich von etwa 50 bis 5000 aufweist.

3. Einrichtung nach Anspruch 1 oder 2, wobei die Kraftübertragungsvorrichtung (40) in hydrostatischen Lagern in einem Abstützelement (36) geführt ist.

4. Einrichtung nach Anspruch 3, wobei die keilartigen Übertragungsvorrichtungen (48, 36) einen ersten und zweiten Keil (48, 52) aufweisen, wobei der erste Keil (48) eine sich horizontal erstreckende Bewegungsachse besitzt und der zweite Keil (52) eine sich vertikal erstreckende Bewegungsachse besitzt, wobei die Kalibriermasse (50) an dem zweiten Keil (52) angebracht ist und eine Kraft auf diesen in vertikaler Richtung ausübt.

5. Einrichtung nach Anspruch 3, wobei die keilartigen Vorrichtungen (48, 36) einen Keil (48) mit einer sich horizontal erstreckenden Bewegungsachse aufweist, wobei eine Kalibriermasse (50) über eine flexible Vorrichtung (32) zum Ziehen des Keils (48) in der horizontalen Richtung daran anbringbar ist.

6. Einrichtung nach einem der vorhergehenden Ansprüche, wobei die Verbindungsvorrichtung (30) aus einem einzigen Verbindungselement (30) besteht, das sich von der Kraftübertragungsvorrichtung (40) zur Basis (12) erstreckt und an einem unteren Ende mit einer Haltevorrichtung (6) zum Befestigen des Verbindungselementes (30) mit der Basis (12) versehen ist.

7. Einrichtung nach Anspruch 6, wobei das untere Ende (2) des Verbindungselementes (30) mit einem Gewinde versehen ist, das geeignet ist, in die in der Basis vorgesehene Haltevorrichtung (6), vorzugsweise in der Form einer fest in die Basis (12) eingesetzten Muffe und mit einem Innengewinde zum Eingriff mit dem Verbindungselement (30) eingeschraubt zu werden.

8. Einrichtung nach Anspruch 3, wobei das Abstützglied (36) eine obere Fläche in Anlage mit einer unteren Fläche des Befestigungselementes (24) über ein hydrostatisches Lager aufweist, wobei die Anlageflächen vorzugsweise kugelförmig sind.

9. Verfahren zum Kalibrieren und/oder Prüfen von Lastmeßzellen (18), die zwischen einer Basis (12) und einem Krafteinleitungselement (22) eines Schwergewichtwiegesystems eingefügt sind, unter Verbinden einer Kraftübertragungsvorrichtung (40) durch einen Durchgang (4) des Krafteinleitungselementes (22) zu der Basis (12) gekennzeichnet durch die Schritte:

a) Anlegen der Kraftübertragungsvorrichtung (40), die selbstjustierende und reibungslose keilartige Übertragungsvorrichtungen (48, 36) aufweist und mit einem Durchgang (26, 28) versehen ist, gegen das Krafteinleitungselement (22) in Ausrichtung mit den Durchgängen (4, 26, 28);

b) Einsetzen eines einzigen Verbindungselementes (30) in die ausgerichteten Durchgänge (4, 26, 28);

c) Belasten der Kraftübertragungsvorrichtung (40) mit einer Kalibriermasse (50) im Bereich von 50 bis 5000 mal kleinerer Masse als die Normbelastung des Wiegesystems;

d) Bestimmen des Meßwertes der Lastmeßzelle;

e) Wiederholen der Schritte c) und d) mit unterschiedlichen Kalibriermassen (50) zum Bestimmen einer Kalibrier- oder Prüfkurve bezüglich der Lastmeßzelle (18).

10. Verfahren nach Anspruch 9, wobei vor den Schritten a) bis e) die Basis (12) mit einer Haltevorrichtung (6) für das Verbindungselement (30) versehen wird und das Krafteinleitungselement (22) mit einem Durchgang (4) im wesentlichen in Ausrichtung zur Vertikalrichtung mit der Haltevorrichtung (6) gebracht wird.

11. Einrichtung nach Anspruch 6, ferner aufweisend:
einen ersten Durchgang (4) in dem Krafteinleitungselement (22) für das Verbindungselement (30), wobei das Verbindungselement (30) durch die Kraftübertragungsvorrichtung (40) durch weitere Durchgänge (26, 28) verläuft, die vertikal mit dem ersten Durchgang (4) ausgerichtet sind.

## Revendications

1. Appareil pour l'étalonnage et/ou le contrôle de boîtes dynamométriques (18) interposées entre une base (12) et un élément (22) d'induction de forces dans des systèmes de pesée de grande puissance, comprenant: un dispositif (40) de transmission de forces, conçu pour être placé contre ledit élément (22) d'induction de forces; et un moyen de solidarisation (30) pour relier ledit dispositif (40) de transmission de forces à ladite base (12), en un emplacement proche de ladite boîte dynamométrique (18), et agencé dans la direction d'une force appliquée à ladite boîte dynamométrique (18) par ledit dispositif (40) de transmission de forces, caractérisé par le fait que le dispositif (40) de transmission de forces présente un moyen transmetteur autoréglable (48, 36) du type à coins, exempt de frottement et chargé par une masse d'étalonnage (50).

2. Appareil selon la revendication 1, dans lequel ledit dispositif (40) de transmission de forces présente un rapport de transmission dans la plage d'environ 50 à 5000.

3. Appareil selon la revendication 1 ou 2, dans lequel ledit dispositif (40) de transmission de forces est guidé dans des portées hydrostatiques, à l'intérieur d'une pièce de support (36).

4. Appareil selon la revendication 3, dans lequel ledit moyen transmetteur (48, 36) du type à coins comprend des premier et second coins (48, 52), ledit premier coin (48) ayant un axe de mouvement s'étendant horizontalement et ledit second coin (52) ayant un axe de mouvement s'étendant verticalement, ladite masse d'étalonnage (50) étant rattachée audit second coin (52), auquel elle applique une force dans une direction verticale.

5. Appareil selon la revendication 3, dans lequel ledit moyen (48, 36) du type à coins présente un coin (48) ayant un axe de mouvement s'étendant horizontalement, auquel une masse d'étalonnage (50) peut être rattachée par un moyen flexible (32), pour tirer ledit coin (48) dans ladite direction horizontale.

6. Appareil selon l'une quelconque des revendications précédentes, dans lequel ledit moyen de solidarisation (30) consiste en une unique pièce de solidarisation (30) s'étendant dudit dispositif (40) de transmission de forces jusqu'à ladite base (12), et est muni, à une extrémité inférieure, d'un moyen de retenue (6) pour fixer ladite pièce de solidarisation (30) à ladite base (12).

7. Appareil selon la revendication 6, dans lequel ladite extrémité inférieure (2) de ladite pièce de solidarisation (30) est pourvue d'un filetage conçu pour être vissé dans ledit moyen de retenue (6) prévu dans ladite base (12), revêtant de préférence la forme d'une douille emboîtée rigidement dans ladite base (12) et présentant un filetage interne pour la venue en prise avec ladite pièce de solidarisation (30).

8. Appareil selon la revendication 3, dans lequel ladite pièce de support (36) présente une face supérieure appliquée contre une face inférieure de ladite pièce de fixation (24), par l'intermédiaire d'une portée hydrostatique, les faces en contact étant préférentiellement de configuration sphérique.

9. Procédé d'étalonnage et/ou de contrôle de boîtes dynamométriques (18) interposées entre une base (12) et un élément (22) d'induction de forces, dans un système de pesée de grande puissance, en reliant un dispositif (40) de transmission de forces à ladite base (12), à travers un passage (4) dudit élément (22) d'induction de forces, caractérisé par les étapes consistant à

a) placer ledit dispositif (40) de transmission de forces, qui présente un moyen transmetteur autoréglable (48, 36) du type à coins exempt de frottement, et est percé d'un passage (26, 28), contre ledit élément (22) d'induction de forces, dans l'alignement desdits passages (4, 26, 28);

b) introduire une unique pièce de solidarisation (30) dans lesdits passages alignés (4, 26, 28);

c) charger ledit dispositif (40) de transmission de forces avec une masse d'étalonnage (50), dans la plage de 50 à 5000 fois inférieure à la charge standard dudit système de pesée;

d) déterminer la lecture de ladite boîte dynamométrique;

e) répéter les étapes c) et d) avec des masses d'étalonnage différentes (50), afin de déterminer une courbe d'étalonnage ou de contrôle en rapport avec ladite boîte dynamométrique (18)

10. Procédé selon la revendication 9, dans lequel, préalablement auxdites étapes a) à e), ladite base (12) est munie d'un moyen (6) de retenue de ladite pièce de solidarisation (30), et ledit passage (4) est ménagé, dans ledit élément (22) d'induction de forces, pour l'essentiel dans l'alignement dudit moyen de retenue (6) dans une direction verticale.

11. Appareil selon la revendication 6, présentant en outre:

un premier passage (4) pratiqué dans ledit élément (22) d'induction de forces, pour ladite pièce de solidarisation (30), ladite pièce de solidarisation (30) traversant ledit dispositif (40) de transmission de forces par l'intermédiaire d'autres passages (26, 28) alignés verticalement avec ledit premier passa-ge (4).